# EUROPÄISCHE PATENTSCHRIFT

(11) **EP 0 872 369 B1**
(45) Veröffentlichungstag und Bekanntmachung des Hinweises auf die Patenterteilung: **25.07.2001**
(21) Anmeldenummer: 98103758.3
(22) Anmeldetag: 04.03.1998
(51) Int. Cl.: B60J 10/04, B60J 10/00

(54) **Kurbelfenster in einer Fahrzeugtür**
Sliding window for vehicle door
Fenêtre coulissante pour porte de véhicule

(30) Priorität: 16.04.1997 DE 19715897
(43) Veröffentlichungstag der Anmeldung: 21.10.1998
(73) Patentinhaber: MAN Nutzfahrzeuge Aktiengesellschaft, 80976 München (DE)
(72) Erfinder: Koch, Erich, 85757 Karlsfeld (DE); Watzek, Gerhard, Dipl.-Ing., 80935 München (DE)

(56) Entgegenhaltungen:
- EP-A- 0 459 219
- EP-A- 0 573 139
- WO-A-97/39907
- FR-A- 2 696 376

## Beschreibung

Die Erfindung betrifft ein Kurbelfenster in einer Fahrzeugtür, gemäß den Merkmalen des Oberbegriffes des Anspruches 1.

Aus der DE 42 25 974 C2 ist ein Kurbelfenster in der Fahrerhaustür eines Lkw mit einer die Fensterscheibe einfassenden 2-teiligen, elastischen Fensterführungsschiene bekannt, deren äußerer Teil mit dem Türfalz und deren innerer Teil mit dem mit der Tür verschraubten inneren Fensterrahmen verbunden ist. Die beiden Teile der Fensterführungsschiene bilden nach der zusammenführenden Montage ein "U". Die äußere Fensterschachtabdichtung ist aus dem äußeren Teil der Fensterführungsschiene mit abgeklinkter Fahne und die innere Fensterschachtabdichtung ist aus einem Klemmprofil mit Dichtfahne zur Fensterscheibe und zur Türbrüstungsverkleidung dichtend gebildet. Die äußere Fensterführungsschiene ist als geschlossener Ring konfektioniert und mit zwei an seinem Umfang angeklebten oder anvulkanisierten Fensterführungsprofilstücken verbunden.

Solcherart wird die Montage des Kurbelfensters wesentlich vereinfacht, indem das Fenster mit der vormontierten, äußeren Fensterführungsschiene und den sich daran durch Klebung oder Vulkanisation anschließenden Fensterführungsprofilstücken direkt von oben einschiebbar ist. Neben der Montageerleichterung wird auch eine Reduzierung von Mängeln, wie beispielsweise Toleranzempfindlichkeit oder unzureichende Klemmung der U-förmigen Fensterführungsschienen vermieden.

Der Erfindung liegt die Aufgabe zugrunde, die Montage und Abdichtung von Kurbelfenstern weiterhin zu optimieren.

Diese Aufgabe wird erfindungsgemäß durch die kennzeichnenden Merkmale des Anspruches 1 erreicht.

Durch die erfindungsgemäße clipsartige Befestigung des inneren Dichtungsprofiles am äußeren Dichtungsprofil ist eine zuverlässige Dichtung und eine erheblich vereinfachte Montage eines Kurbelfensters in einer Fahrzeugtür gegeben. Nach der Anbringung des äußeren Dichtungsprofiles auf einem Türfalz der Fahrzeugtür kann die Fensterscheibe eingesetzt und anschließend das innere Dichtungsprofil mit einer zu einer Clipsnase ausgebildeten Dichtlippe verrastend in einen Freiraum zwischen einer abgewinkelten Fahne des äußeren Dichtungsprofiles und einem einen Fensterrahmen der Fahrzeugtür bildenden Türblech eingeschoben werden. Dabei stützt sich die an der Fahne des äußeren Dichtungsprofiles verrastende Clipsnase zusätzlich am Türblech ab. Nach zusammenführender Montage von innerem und äußerem Dichtungsprofil ergibt sich eine die Fensterscheibe in ihrem Randbereich umlaufend einfassende, in ihrem Profilquerschnitt etwa ein "U" bildende Fensterführungsschiene. Diese führt und dichtet die Fensterscheibe in einem Fensterausschnitt der Fahrzeugtür ab. Um das Durchtauchen der herunterzukurbelnden Fensterscheibe in einem türseitigen Schachtbereich des Kurbelfensters zu ermöglichen, ist die abgewinkelte Fahne des äußeren Dichtungsprofiles in diesem Schachtbereich abgeklinkt. Innenseitig des Kurbelfensters ist dessen Schachtbereich anstelle eines inneren Dichtungsprofiles durch ein die Dichtfunktion erfüllendes separates Dichtprofil gegeben. Das äußere Dichtungsprofil kann als geschlossener Ring ausgeführt sein. Des weiteren weist das äußere und innere Dichtungsprofil wenigstens im Bereich ihres gemeinsam gebildeten, den Randbereich der Fensterscheibe einfassenden U" einen Profilabschnitt mit erhöhter Eigensteifigkeit auf. Die bereichsweise erhöhte Eigensteifigkeit der inneren und äußeren Dichtungsprofile innerhalb des Profilabschnittes stellt einerseits die Verrastung der Clipsnase zwischen Fahne und Türblech sicher und sorgt andererseits für das abdichtende Anlegen des inneren und äußeren Dichtungsprofiles an die Randbereiche der Fensterscheibe.

Gemäß einer weiterführenden Ausgestaltung der Erfindung kann die Fahne des äußeren Dichtungsprofiles auf ihrer dem Randbereich der Fensterscheibe abgewandten Seite einen vorragend umlaufenden Clipsrand aufweisen, der von einer komplementär hierzu ausgebildeten, als Teil der Clipsnase gebildeten Clipsrinne verrastend umgreifbar ist. Durch den Formschluß von Clipsrand und Clipsrinne ist eine zuverlässige und spielfreie Verrastung von innerem Dichtungsprofil am äußeren Dichtungsprofil gegeben. Infolge der gegebenen Eigensteifigkeit von äußerem und innerem Dichtungsprofil und dem zusätzlichen Abstützen der Clipsnase durch das Türblech kann die Clipsnase in ihrer Verrastposition an der Fahne gehalten werden.

Gemäß einer weiteren Ausgestaltung der Erfindung kann der Clipsrand der Fahne eine, mit einer Stützschräge der Clipsrinne korrespondierende Anschlagschräge aufweisen, die von einem endseitig der Clipsnase gebildeten Auslaufprofil unterwanderbar ist. Durch entsprechend aufeinander abgestimmte Formgebung der beim Unterschieben der Clipsnase unter die Fahne einander gleitend berührenden Flächen von Anschlagschräge und Auflaufprofil ist ein problemloses Einschieben und Einclipsen der Clipsnase unter die Fahne ermöglicht.

Gemäß einer weiteren Ausgestaltung der Erfindung kann das Auflaufprofil an einer zusätzlichen, komplementär hierzu ausgebildeten Fläche der Fahne abgestützt sein. Dadurch kann im eingebauten Zustand die endseitg der Fahne gebildete Anschlagschräge in ihrer Stützfunktion teilweise entlastet werden.

Gemäß einer weiteren Ausgestaltung der Erfindung kann die Fahne des äußeren Dichtungsprofiles ein separates, an dem Klemmteil des äußeren Dichtungsprofiles anvulkanisiertes oder angeklebtes Profil sein. Dabei kann die Fahne im Schachtbereich des Kurbelfensters bereits ausgespart sein und muß nicht durch einen separaten Arbeitsschritt vom übrigen, äußeren Dichtungsprofil abgeklinkt werden.

Gemäß einer weiteren Ausgestaltung der Erfindung kann gegen die Fensterscheibe abgestützt, das äußere Dichtungsprofil fensteraußenseitig ein elastisches Element und fensterrandseitig einen Dicht- oder Stützsteg und das innere Dichtungsprofil fensterinnenseitig ein elastisches Element aufweisen. Dabei sind die elastischen Elemente, bzw. der Dicht- oder Stützsteg Bestandteil des jeweiligen Dichtungsprofiles und können neben Dichtungseigenschaften auch Führungseigenschaften bezüglich der Fensterscheibe aufweisen. Die elastischen Elemente des inneren und äußeren Dichtungsprofiles können beispielsweise durch Schlauchteile oder andere geeignete Profile gegeben sein. Der Stützsteg kann auch Dichtungsfunktion aufweisen.

Gemäß einer weiteren Ausgestaltung der Erfindung können die elastischen Elemente und der Dicht- oder Stützsteg flexible Eigenschaften und eine der Fensterscheibe zugewandte Beschichtung aufweisen. Diese Beschichtung kann beispielsweise durch eine Beflockung oder durch eine andere, dem Gleiten und Dichten förderliche Anlagefläche der Dichtungsprofile gegeben sein.

Gemäß einer weiteren Ausgestaltung der Erfindung kann die wenigstens bereichsweise erhöhte Eigensteifigkeit des Profilabschnittes von äußerem und innerem Dichtungsprofil entweder durch in ihrem Profilquerschnitt eingelagerte Metalleinlagen und/oder durch das bereichsweise Vorsehen steifigkeitserhöhender Werkstoffzusammensetzungen in den Dichtungsprofilen und/oder durch das Vorsehen vergrößerter Pofilquerschnitte realisiert sein. Als steifigkeitserhöhende Werkstoffzusammmensetzungen können sowohl Kunststoffe mit voneinander verschiedener Werkstoffkonsistenz als auch Werkstoffverbundmaterialien, wie beispielsweise von Blechen eingefaßte Kunststoffe gegeben sein. In letzterem Fall können beispielsweise das äußere Dichtungsprofil wenigstens im Bereich seiner Fahne und das innere Dichtungsprofil wenigstens im Bereich seiner Clipsnase von stützenden Ummantelungen aus Blech, Hartkunststoff oder anderen geeigneten Materialien umgeben sein.

Gemäß einer weiteren Ausgestaltung der Erfindung kann das innere Dichtungsprofil zusätzlich von einer fensterrahmenseitigen Blende abgestützt sein. Diese kann mit dem inneren Dichtungsprofil verbunden oder an diesem anliegend sein.

Gemäß einer weiteren Ausgestaltung der Erfindung kann die Fensterscheibe durch die fensterinnenseitige Anordnung eines Stützelementes am Türblech gegen ein Eindrücken gesichert sein. Das Stützelement kann zum inneren Dichtungsprofil beabstandet oder an diesem anliegend angeordnet sein und innenseitig des Kurbelfensters am Türblech befestigt sein.

Nachfolgend ist die Erfindung anhand in der Zeichnung schematisch dargestellter Ausführungsbeispiele näher erläutert. In der Zeichnung zeigen:
- Fig. 1: eine erste Ausführungsart eines Kurbelfensters,
- Fig. 2: eine zweite Ausführungsart eines Kurbelfensters und
- Fig. 3: schematisch eine Montagefolge eines Kurbelfensters.

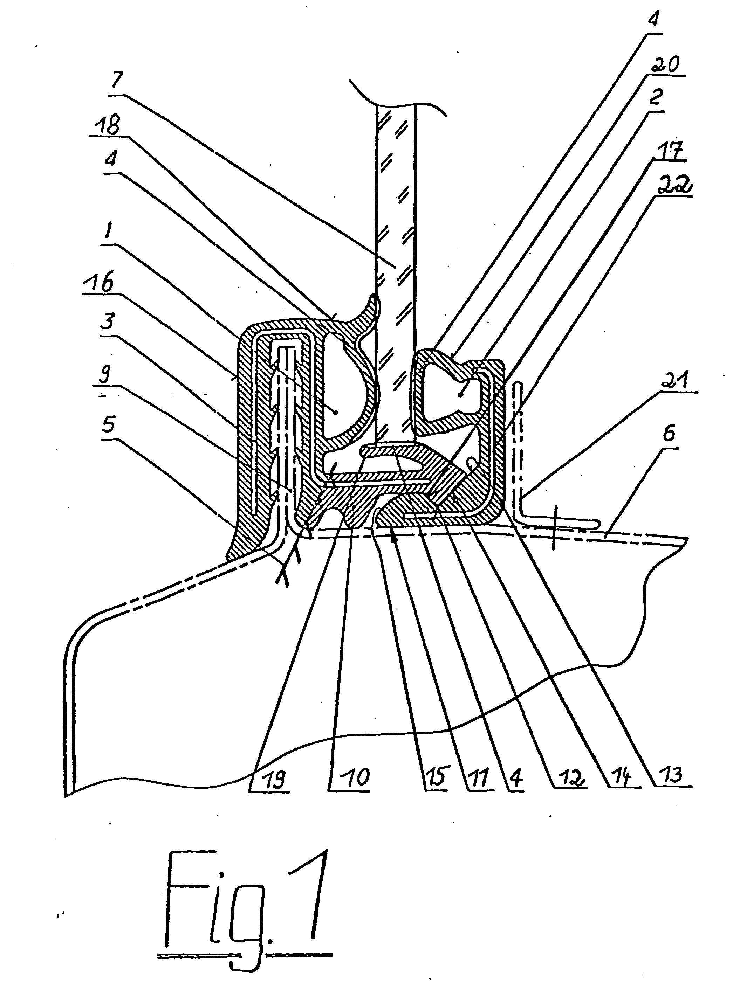

In Fig. 1 ist ein Kurbelfenster in einer Fahrzeugtür mit einer eine Fensterscheibe 7 einfassenden 2-teiligen, elastischen Fensterführungsschiene 1, 2 gezeigt. Diese besteht aus einem äußeren Dichtungsprofil 1 und einem inneren Dichtungsprofil 2, die beide nach zusammenführender Montage etwa ein die Fensterscheibe 7 in ihrem Randbereich einfassendes "U" bilden. Das äußere Dichtungsprofil 1 ist mit einem Klemmteil 16 auf einem Türfalz 9 der Fahrzeugtür angeordnet und weist zusätzlich eine mit dem Klemmteil 16 verbundene, fahrzeugeinwärts gerichtete, an einem Türblech 6 der Fahrzeugtür bereichsweise anliegende, abgewinkelte Fahne 10 auf. Das innere Dichtungsprofil 2 weist eine an der Fahne 10 des äußeren Dichtungsprofiles 1 dichtend anliegende Dichtlippe 11 auf. Diese ist zu einer Clipsnase 11 ausgebildet, die zur Befestigung des inneren Dichtungsprofiles 2 am äußeren Dichtungsprofil 1 in einen Freiraum zwischen dessen Fahne 10 und dem Türblech 6 schiebbar und unter Abstützung an letzterem clipsartig an der Fahne 10 verrastbar ist. Die Fahne 10 des äußeren Dichtungsprofiles 1 weist auf ihrer dem Randbereich der Fensterscheibe 7 abgewandten Seite einen vorragend umlaufenden Clipsrand 12 auf. Dieser ist von einer komplementär hierzu und als Teil der Clipsnase 11 ausgebildeten Clipsrinne 17 verrastend umgriffen.

Das äußere Dichtungsprofil 1 kann als geschlossener Ring ausgebildet sein, dessen fahrzeugeinwärts gerichtete Fahne 10 in einem Schachtbereich des Kurbelfensters zum Durchtauchen einer herunterzukurbelnden Fensterscheibe 7, gemäß etwa einer Trennlinie 5, abgeklinkt ist. Der hier nicht gezeigte Schachtbereich des Kurbelfensters ist durch ein das innere Dichtungsprofil 2 ersetzendes, separates Dichtprofil abgedichtet. Dieses kann in herkömmlicher Weise innenseitig des Kurbelfensters angebracht sein.

In der hier gezeigten Version weisen das äußere Dichtungsprofil 1 und das innere Dichtungsprofil 2 im Innern ihrer Querschnitte jeweils stabilisierende Metalleinlagen 3, 22 auf. Die wenigstens bereichsweise vorgesehene Eigensteifigkeit von innerem und äußerem Dichtungsprofil 1, 2 kann zusätzlich oder alternativ durch das Vorsehen von Zonen vergrößerter Profilquerschnitte und/oder durch das Vorsehen von steifigkeitserhöhenden Werkstoffzusammensetzungen in den Dichtungsprofilen 1, 2 gegeben sein.

Der an der Fahne 10 vorragend gebildete Clipsrand 12 weist eine Anschlagschräge 14 auf, die mit einer Stützschräge 13 der Clipsrinne 17 korrespondiert. Die Stützschräge 13 ist Bestandteil der Clipsrinne 17. Die Anschlagschräge 14 ist von einem endseitig der Clipsnase 11 gebildeten Auflaufprofil 15 gleitend unterwanderbar. Somit ist die Clipsnase 11 des inneren Dichtungsprofiles 2 mühelos unter die zur Seite der Fensterscheibe 7 hin ausweichenden Fahne 10 einschiebbar und an dieser verrastbar, während sich die Clipsnase 11 an ihrer der Fensterscheibe 7 abgewandten Seite gegen das Türblech 6 der Fahrzeugtür abstützt. Die bei der Montage des inneren Dichtungsprofiles erfolgende, gleitende Anlage des Auflaufprofiles 15 und der Anschlagschräge 14 kann durch entsprechende Formgestaltung beider Bauteile optimiert werden. Gemäß einer hier nicht gezeigten Version kann das Auflaufprofil 15 an einer zusätzlichen, komplementär hierzu ausgebildeten Fläche der Fahne 10 abgestützt sein, wodurch die Anschlagschräge 14 des Dichtungsprofiles 1 in ihrer Stützfunktion teilweise entlastet ist.

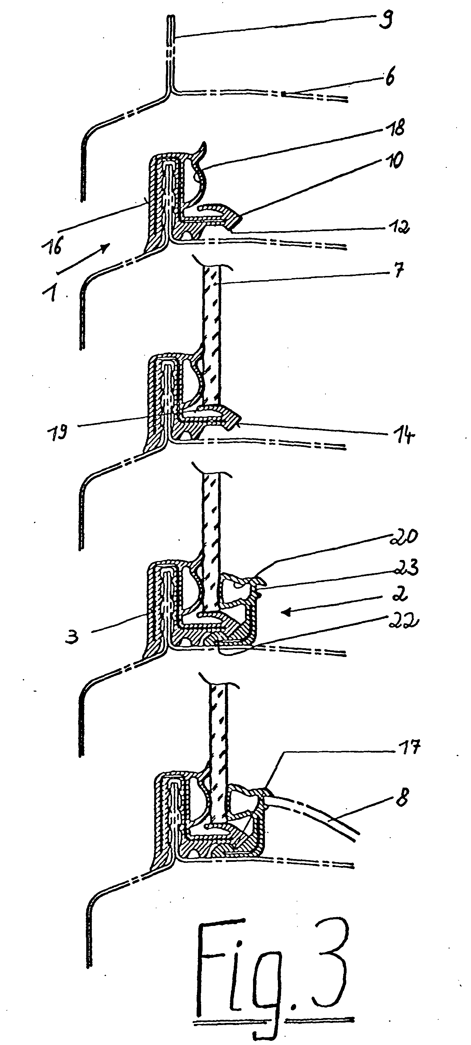

Die Fahne 10 des äußeren Dichtungsprofiles 1 ist in dem hier gezeigten Ausführungsbeispiel ein separates, an dem Klemmteil 16 des äußeren Dichtungsprofiles 1 im Anschlußbereich der Trennlinie 5 anvulkanisiertes oder angeklebtes Profil. Dieses weist zusammen mit dem Klemmteil 16 eine gemeinsame, innere Metalleinlage 3 zur Stabilisierung des äußeren Dichtungsprofiles 1 auf. Alternativ hierzu ist bei der in Fig. 3 gezeigten Version das äußere Dichtungsprofil 1 ein aus Klemmteil 16 und Fahne 10 einteilig gebildetes Bauteil. Das innere Dichtungsprofil 2 weist dabei innenseitig eine diese stabilisierende Metalleihlage 22 auf.

Das Klemmteil 16 des äußeren Dichtungsprofiles 1 weist außenseitig an der Fensterscheibe 7 dichtend anliegend ein als Schlauchteil ausgebildetes, elastisches Element 18 auf. Bei dem äußeren Dichtungsprofil 1 ist fensterrandseitig zusätzlich die Fahne 10 mit einem abragenden Dichtsteg 19 versehen. Dieser liegt an den seitlichen Rändern der Fensterscheibe 7 dichtend an und kann bei entsprechender Dimensionierung als Stützsteg ausgebildet sein. Das innere Dichtungsprofil 2 weist ein an der Innenseite der Fensterscheibe 7 dichtend anliegendes, als Schlauchteil ausgebildetes, elastisches Element 20 auf. Die Schlauchteile 18, 20 und der Dichtsteg 19 weisen eine fensterseitig zugewandte Beschichtung auf. Diese kann durch eine Beflockung oder durch eine dem Gleiten und Dichten dienliche Anlagefläche der Dichtungsprofile gegeben sein. Die Fensterscheibe 7 kann durch fensterinnenseitig am Türblech 6 befestigte, zusätzliche Stützelemente 21 gegen ein Eindrücken gesichert sein. Das Stützelement 21 kann beabstandet zum inneren Dichtungsprofil 2 oder an diesem anliegend angeordnet sein. In letzterem Fall dient das Stützelement 21 zusätzlich als Versteifung für das innere Dichtungsprofil 2.

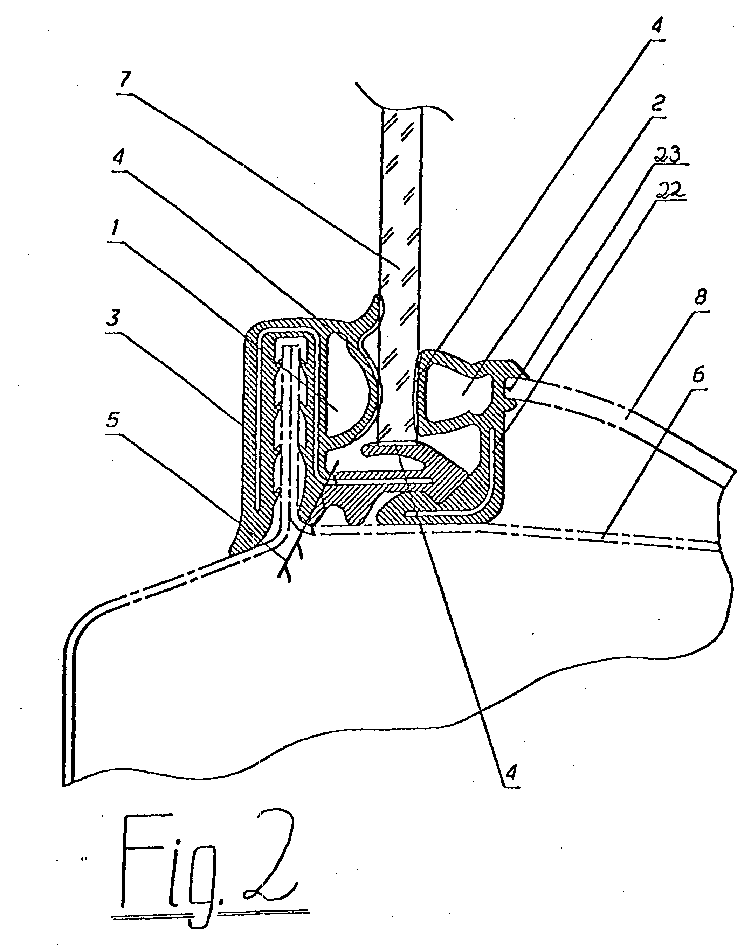

Das in Fig. 2 gezeigte Kurbelfenster entspricht im wesentlichen dem in Fig. 1 dargestellten. Das innere Dichtungsprofil 2 weist zusätzlich in seinem Rückenbereich eine Aufnahmenut 23 auf, in die eine fensterrahmenseitig befestigte Blende 8 zur zusätzlichen Abstützung des inneren Dichtungsprofiles 2 einführbar ist.

Fig. 3 zeigt die Montagefolge eines Kurbelfensters in einer Fahrzeugtür. Zunächst wird auf einen Türfalz 9 einer Fahrzeugtür ein äußeres Dichtungsprofil 1 mit seinem Klemmteil 16 festgeklemmt. Es folgt das Einsetzen der Fensterscheibe 7 und anschließend die clipsartige Festrastung des inneren Dichtungsprofiles 2 zwischen dem äußeren Dichtungsprofil 1 und dem Türblech 6. Hierbei wird das innere Dichtungsprofil 2 mit seiner Clipsnase 11 in einen Freiraum zwischen die abgewinkelte Fahne 10 des äußeren Dichtungsprofiles 1 und dem Türblech 6 eingeführt und an der Fahne 10 bei gleichzeitiger Abstützung am Türblech 6 verrastet. In dem hier gezeigten Beispiel ist zur zusätzlichen Abstützung des inneren Dichtungsprofiles 2 eine fensterrahmenseitige Blende 8 einenendes in eine Aufnahmenut 23 des inneren Dichtungsprofiles 2 eingeführt und anderenendes an der Innenseite der Fahrzeugtür befestigt.

## Patentansprüche

1. Kurbelfenster in einer Fahrzeugtür, mit einer eine Fensterscheibe (7) einfassenden 2-teiligen, elastischen Fensterführungsschiene (1, 2), deren äußeres Dichtungsprofil (1) und inneres Dichtungsprofil (2) nach zusammenführender Montage in ihrem Profilquerschnitt etwa ein die Fensterscheibe (7) in ihrem Randbereich einfassendes "U" bilden, wobei das äußere Dichtungsprofil (1) mit einem Klemmteil (16) auf einem Türfalz (9) angeordnet, eine fahrzeugeinwärts gerichtete, an einem Türblech (6) anliegende, abgewinkelte Fahne (10) und das innere Dichtungsprofil (2) eine an der Fahne (10) dichtend anliegende Dichtlippe (11) aufweist, dadurch gekennzeichnet, daß das innere Dichtungsprofil (2) mit einer als Clipsnase ausgebildeten, sich am Türblech (6) abstützenden Dichtlippe (11) in einen Freiraum zwischen Türblech (6) und Fahne (10) einführbar und an letzterer verrastbar ist, wobei das äußere Dichtungsprofil (1) und das innere Dichtungsprofil (2) wenigstens im Bereich ihres gemeinsam gebildeten, den Randbereich der Fensterscheibe (7) einfassenden U" einen Profilabschnitt mit erhöhter Eigensteifigkeit aufweisen.

2. Kurbelfenster nach Anspruch 1, dadurch gekennzeichnet, daß die Fahne (10) des äußeren Dichtungsprofiles (1) auf ihrer dem Randbereich der Fensterscheibe (7) abgewandten Seite einen vorragend umlaufenden Clipsrand (12) aufweist, der von einer komplementär hierzu ausgebildeten, als Teil der Clipsnase (11) gebildeten Clipsrinne (17) verrastend umgreifbar ist.

3. Kurbelfenster nach Anspruch 2, dadurch gekennzeichnet, daß der Clipsrand (12) der Fahne (10) eine, mit einer Stützschräge (13) der Clipsrinne (17) korrespondierende Anschlagschräge (14) aufweist, die von einem endseitig der Clipsnase (11) gebildeten Auflaufprofil (15) unterwanderbar ist.

4. Kurbelfenster nach Anspruch 3, dadurch gekennzeichnet, daß das Auflaufprofil (15) an einer zusätzlichen, komplementär hierzu ausgebildeten Fläche der Fahne (10) abgestützt ist.

5. Kurbelfenster nach einem der Ansprüche 1 bis 4, dadurch gekennzeichnet, daß die Fahne (10) des äußeren Dichtungsprofiles (1) ein separates, an dem Klemmteil (16) des äußeren Dichtungsprofiles (1) anvulkanisiertes oder angeklebtes Profil ist.

6. Kurbelfenster nach einem der Ansprüche 1 bis 4, dadurch gekennzeichnet, daß gegen die Fensterscheibe (7) abgestützt, das äußere Dichtungsprofil (1) fensteraußenseitig ein elastisches Element (18) und fensterrandseitig einen Dichtoder Stützsteg (19) und das innere Dichtungsprofil (2) fensterinnenseitig ein elastisches Element (20) aufweist.

7. Kurbelfenster nach Anspruch 5, dadurch gekennzeichnet, daß die elastischen Elemente (18, 20) und der Dicht- oder Stützsteg (19) flexible Eigenschaften und eine der Fensterscheibe (7) zugewandte Beschichtung (4) aufweisen, und daß die Beschichtung (4) gleitfördernde und dichtende Eigenschaften hat.

8. Kurbelfenster nach Anspruch 1, dadurch gekennzeichnet, daß die wenigstens bereichsweise erhöhte Eigensteifigkeit des Profilabschnittes von äußerem und innerem Dichtungsprofil (1, 2) entweder durch in ihrem Profilquerschnitt eingelagerte Metalleinlagen (3, 22) und/oder durch das bereichsweise Vorsehen steifigkeitserhöhender Werkstoffzusammensetzungen in den Dichtungsprofilen (1, 2) und/oder durch das Vorsehen vergrößerter Profilquerschnitte realisiert ist.

9. Kurbelfenster nach einem oder mehreren der vorangegangenen Ansprüche 1 bis 8, dadurch gekennzeichnet, daß das innere Dichtungsprofil (2) zusätzlich von einer fensterrahmenseitigen Blende (8) abgestützt ist.

10. Kurbelfenster nach einem oder mehreren der vorangegangenen der Ansprüche 1 bis 9, dadurch gekennzeichnet, daß die Fensterscheibe (7) durch die fensterinnenseitige Anordnung eines Stützelementes (21) am Türblech (6) gegen ein Eindrücken gesichert ist.

## Claims

1. Crank-operated window in a vehicle door, with a bipartite elastic window guide rail (1, 2) which encompasses a window pane (7) and whose outer sealing section (1) and inner sealing section (2), once assembled, show in their cross-section approximately a "U" shape encompassing the window pane (7) in its edge area, the outer sealing section (1) with a clamping part (16) being arranged on a door seam (9) and provided with a lug (10) which is offset, points towards the vehicle interior and contacts the door sheet metal (6) and the inner sealing section (2) being provided with a sealing lip (11) which contacts the lug (10) in a sealing manner, characterised in that the inner sealing section (2) with a sealing lip (11) designed as a clip nose and supported on the door metal sheet (6) can be introduced into an empty space between the door metal sheet (6) and the lug (10) and be locked on to this, the outer sealing section (1) and the inner sealing section (2) showing a sectional portion of increased inherent stiffness at least in the jointly formed "U"-shaped area encompassing the edge area of the window pane (7).

2. Crank-operated window according to Claim 1, characterised in that the lug (10) of the outer sealing section (1) is provided with a projecting continuous clip edge (12) on the side facing away from the edge area of the window pane (7), which clip edge (12) can be encompassed in a locking manner by a clip runner (17) which as part of the clip nose (11) is designed to complement said clip edge (12).

3. Crank-operated window according to Claim 2, characterised in that the clip edge (12) of the lug (10) is provided with an oblique stopping face (14) corresponding to an oblique support face (13) on the clip runner (17), under which oblique stopping face (14) a contact section (15) formed by the end of the clip nose (11) can move.

4. Crank-operated window according to Claim 3, characterised in that the contact section (15) is supported by an additional face of the lug (10), which face is complementary to said contact section (15).

5. Crank-operated window according to one of the Claims 1 to 4, characterised in that the lug (10) of the outer sealing section (1) is a separate section vulcanised or glued on to the clamping part (16) of the outer sealing section (1).

6. Crank-operated window according to one of the Claims 1 to 4, characterised in that the outer sealing section (1) is supported on the window pane (7) and provided with an elastic element (18) on the outer side of the pane and with a sealing or support: web (19) on the window pane edge and that the inner sealing section (2) is provided with an elastic element (20) on the inner side of the window pane.

7. Crank-operated window according to Claim 5, characterised in that the elastic elements (18, 20) and the sealing or support web (19) have flexible properties and a coating (4) on the side facing the window pane (7) and that the coating (4) has slide-enhancing and sealing properties.

8. Crank-operated window according to Claim 1, characterised in that the inherent stiffness of the sectional portion of the outer and inner sealing sections (1, 2) at least in some areas is realised either by metal inserts (3, 22) installed in their cross-section and/or by the provision in some areas of stiffness-enhancing material compositions in the sealing sections (1, 2) and/or by the provision of enlarged cross-sections.

9. Crank-operated window according to one or several of the foregoing Claims 1 to 8, characterised in that the inner sealing section (2) is also supported by a screen (8) on the window frame.

10. Crank-operated window according to one or several of the foregoing Claims 1 to 9, characterised in that the window pane (7) is provided with a support element (21) arranged on the inner side of the window pane and attached to the door metal sheet (6) to secure the window pane (7) against being pressed in.

## Revendications

1. Fenêtre à crémaillère dans une porte de véhicule dans laquelle
- une vitre de fenêtre (7) est insérée dans un rail de guidage de fenêtre, élastique, composé de deux parties (1, 2), à savoir un profilé externe d'étanchéité (1) et un profilé interne d'étanchéité (2) qui, après montage destiné à les réunir, donnent un profilé dont la section forme à peu près un « U » dont les bords enserrent la vitre de fenêtre (7),
- le profilé externe d'étanchéité (1) est monté par une partie de serrage (16) sur une agrafe (9) de la porte et présente, dirigé vers l'intérieur du (16, 9) véhicule, une aile coudée (10), appliquée sur une tôle (6) de la porte, et
- le profilé interne d'étanchéité (2) présente une lèvre d'étanchéité (11) en application étanche sur l'aile (10),
caractérisée en ce que
le profilé interne d'étanchéité (2), par sa lèvre d'étanchéité (11) en forme d'ergot de clipsage en appui sur la tôle de porte (6), peut être introduit dans un espace libre entre la tôle de porte (6) et l'aile (10) et y être bloqué sur cette aile, les profilés d'étanchéité externe (1) et interne (2) présentant chacun au moins dans la zone où le « U » qu'ils forment en commun enserre le bord de la vitre (7), une partie de profilé à rigidité propre élevée.

2. Fenêtre selon la revendication 1,
caractérisée en ce que
l'aile (10) du profilé externe (1), sur sa face éloignée du bord de la vitre (7) présente un bord de clipsage (12), périphérique en saillie, autour duquel peut venir se bloquer une gorge de clipsage (17), de configuration complémentaire, faisant partie de l'ergot de clipsage (11).

3. Fenêtre selon la revendication 2,
caractérisée en ce que
le bord de clipsage (12) de l'aile (10) présente, en correspondance avec une pente d'appui (13) de la gorge de clipsage (17), une pente de butée (14) sous laquelle peut passer un profilé d'entrée (15) formé à l'extrémité de l'ergot de clipsage (11).

4. Fenêtre selon la revendication 3,
caractérisée en ce que
le profilé d'entrée (15) est en appui sur une portée de l'aile (10) supplémentaire et de configuration complémentaire à celle du profilé.

5. Fenêtre selon l'une quelconque des revendications 1 à 4,
caractérisée en ce que
l'aile (10) du profilé externe d'étanchéité (1) est un profilé distinct, sur lequel est vulcanisée ou collée la partie de serrage (16) du joint externe (1).

6. Fenêtre selon l'une quelconque des revendications 1 à 4,
caractérisée en ce que
le joint externe (1) présente en appui sur la vitre (7) vers l'extérieur, un élément élastique (18) et, vers le bord de la vitre, une barrette d'étanchéité ou d'appui (19), tandis que le joint interne (2) présente, vers la face interne de la vitre, un élément élastique (20).

7. Fenêtre selon la revendication 5,
caractérisée en ce que
les éléments élastiques (18, 20) et la barrette d'étanchéité ou d'appui (19) sont flexibles et portent en regard de la vitre (7), un revêtement (4) présentant des propriétés de glissement et d'étanchéité.

8. Fenêtre selon la revendication 1,
caractérisée en ce que
la rigidité propre, élevée au moins localement, d'une partie des profilés externe et interne (1, 2) est donnée par des inserts métalliques (3, 22) noyés dans les profilés et/ou en prévoyant, localement, dans la matière des profilés (1, 2) des compositions augmentant la rigidité et/ou en prévoyant une augmentation des sections des profilés.

9. Fenêtre selon l'une quelconque des revendications 1 à 8,
caractérisée en ce que
le profilé interne (2) s'appuie en plus sur un cadre (8) monté du côté du cadre de la fenêtre.

10. Fenêtre selon l'une quelconque ou plusieurs des revendications 1 à 9,
caractérisée en ce que
la vitre de fenêtre (7) est assurée contre un enfoncement en disposant sur la tôle de porte (6) du côté intérieur de la fenêtre, un élément d'appui (21).
